Europäisches Patentamt

European Patent Office

Office européen des brevets

(19)

(11) Veröffentlichungsnummer: **0 263 330**
**A2**

(12) **EUROPÄISCHE PATENTANMELDUNG**

(21) Anmeldenummer: **87113442.5**

(22) Anmeldetag: **15.09.87**

(51) Int. Cl.4: **C05F 13/00 , C05F 9/04**

(30) Priorität: **09.10.86 DE 3634476**

(43) Veröffentlichungstag der Anmeldung:
**13.04.88 Patentblatt 88/15**

(84) Benannte Vertragsstaaten:
**AT BE CH DE ES FR GB GR IT LI LU NL SE**

(71) Anmelder: **Altvater & Co. GmbH**
**Waltgeristrasse 32**
**D-4900 Herford(DE)**

(72) Erfinder: **Albrecht, Bernd, Dipl.-Ing.**
**Bahnhofstrasse 63**
**D-4980 Bünde 1(DE)**
Erfinder: **Pelz, Udo, Dipl.-Ing.**
**In den Weiden 21**
**D-6702 Bad Dürkheim 4(DE)**
Erfinder: **Tuminski, Ralf, Dr. Ing.**
**Maschbruchstrasse 3**
**D-4980 Bünde 1(DE)**
Erfinder: **Weber, Gerd**
**Pestalozzistrasse 23**
**D-8570 Pegnitz(DE)**

(74) Vertreter: **Busse & Busse Patentanwälte**
**Postfach 1226**
**D-4500 Osnabrück(DE)**

(54) **Aus organischen Massen aufbereiteter Kompost und Verfahren zu dessen Herstellung.**

(57) Die Erfindung bezieht sich auf ein Verfahren zur Herstellung eines Komposts, der aus organischen Massen auch gezielt Papiere gleicher oder ungleicher Art als Ausgangsmaterial enthält. Dazu ist vorgesehen, daß organischer Müll aus Haushalt und/oder Gewerbe, von artfremden Stoffen befreit, zusammen mit Papieren in einem dynamischen Prozeß verrottet wird. Dabei wird bevorzugt, wenn bei Haushalten und Gewerbe organische Abfälle zusammen mit Papieren von anderen Stoffen gesondert gesammelt und gemeinsam fermentiert werden. Der Anteil an Papieren kann dabei zwischen 20 und 50%, vorzugsweise bei ca. 30% liegen. Die Beimischung von schadstoffarmen Klärschlamm und anderen bekannten Zuschlagstoffen ist möglich. Verweilzeit, Temperatur und Feuchtigkeitsgrad sind dabei regel-und einstellbar.

## Aus organischen Massen aufbereiteter Kompost und Verfahren zu dessen Herstellung

Kompost aus organischen Massen wird nach dem Stand der Technik in unterschiedlicher Weise hergestellt. Der einfache Weg ist, die Massen auf Mieten zu lagern und dort verrotten zu lassen. Bekannt sind auch hohe Türme, in denen die zerkleinerte Massen entgegen eingedrückter Luft von oben nach unten wandern. Wenn hierbei eine Bewegung der Massen stattfindet, so handelt es sich gleichwohl ebenfalls um einen weitgehend statischen Vorgang.

Diese weitgehend statischen aeroben Verrottungsverfahren ergeben einen sehr inhomogenen Kompost, dessen Wert für den Boden gering ist, weil einzelne Zonen meist nur aus einem schwer, andere wieder überwiegend aus leichter verrottbarem Material bestehen. die einen Zonen eventuell zu viel, die anderen zu wenig Sauerstoff erhalten, der Prozeß also nicht gleichmäßig und überall ausreichend abläuft.

Dynamische Verfahren, bei denen die organischen Massen in Anlagen zum Zwecke ihrer Verrottung bewußt, also untereinander laufend gemischt und dabei alle Masseanteile weitgehend gleichmäßig Sauerstoff, geregelte Wärme und Feuchtigkeit ausgesetzt werden, ergeben Kompost homogeneren Zustandes, so daß er schon aus diesem Grund bessere Eigenschaften aufweist, als der statisch aufbereitete.

Bei diesen dynamischen Verfahren können die organischen Massen in dünnen Schichten auf Etagenböden, auf denen oder von denen sie von oben nach unten bewegt werden, oder in horizontale oder schräg dazu drehbar angeordneten Trommeln verrottet werden, so daß nicht nur homogener Kompost entsteht, sondern, daß alle Zonen gleichmäßig mit Sauerstoff und Wärme beaufschlagt werden und gleichmäßig feucht sind.

Unter organischen Massen sind im Sinne der Erfindung alle gewachsenen Naturprodukte und Abfälle aus Haushalt und Gewerbe zu verstehen, soweit sie ohne großen Aufwand zerkleinerbar sind. Nicht ausgeschlossen im Sinne der Erfindung sind allgemein übliche Zuschlagstoffe, wie Ton, Steinmehl, Harnstoffe und andere.

Daß einer Aufbereitung insbes. von organischen Abfällen aus Gewerbe und Haushalt immer mehr Bedeutung zukommt, geht allein daraus hervor, daß überall versucht, zumindest angeregt wird, den organischen Müll in Sondertonnen zu sammeln und einer sinnvollen Verwertung zuzuführen, statt ihn auf ohnehin schon überfüllten Deponien abzulagern.

Gleiches Verhalten ist mit anderen Abfällen zu beobachten. Glas Papier und Metalle sollen und werden auch schon zum Teil gesondert gesammelt und anderweitig genutzt. Diese Sondersammlungen haben sich sogar zumindest bei Papieren aller Art als nicht sehr nutzvoll erwiesen, weil kein ausreichender Bedarf mehr dafür vorhanden ist. So ist es nicht selten, daß gesondert gesammelte Papiere - schließlich auf Mülldeponien landen.

Die Erfindung hat sich die Aufgabe gestellt, den Kompost aus den angegebenen Massen zu verbessern, den Anteil der in den Auszugmassen vorhandenen Schwermetalle zu vermindern und ihm weitere, nicht anderweitig ausnutzbare Zuschlagstoffe beizumengen sowie ein Verfahren für die Herstellung eines derartigen Kompostes und eine hierfür geeignete Anlage anzugeben.

Diese Aufgabe löst die Erfindung dadurch, daß den üblichen organischen Ausgangsmassen, Papiere gleicher oder ungleicher Art in bestimmten Mengen beigemischt werden.

In ihrem Ursprung sind die Produkte, die man allgemein als Papiere bezeichnet, zwar auch organisch, soweit sie Zellstoff enthalten, im Zusammenhang mit Abfällen aus Haushalt und Gewerbe aber werden sie, wenn der Müll sortiert gesammelt wird, streng von organischen Massen getrennt, wie allgemein geläufig ist. Jedenfalls hat bisher die Erkenntnis, die durch die Erfindung gewonnen wurde, gefehlt; nämlich diejenige, daß papierhaltiger Kompost einen erheblich geringeren Anteil an Schwermetallen enthält, daß er ein besseres C/N Verhältnis, ein besseres Porenverhältnis aufweist und dessen Feuchtigkeit erheblich besser für die Kompostierung regulierbar ist.

Versuche haben ergeben, daß bei dem Kompost nach der Erfindung der gesamte Schwermetallanteil beim bisher erreichbaren Optimum 347,2 mg/kg beträgt, wobei der Durchschnittswert von acht verschiedenen herkömmlichen Komposten 2.478,8 mg/kg beträgt. Der neue Kompost weist also nur bis zu 14% des normalen Schwermetallanteils auf.

Andere Versuche mit höher belasteten Papieren haben einen Schwermetallanteil von 498,18 mg/kg, also 19,7% des allgemein üblichen Durchschnittswertes ergeben. Berücksichtigt wurden dabei Pb, Cd, Cr, Ni, Cu und Zn bei allen Vergleichswerten. Als Vergleich möge Blei dienen: Der Durchschnittsgehalt von Blei beträgt 513 mg/kg. Die Tests mit dem Verfahren nach der Erfindung haben Pb-Gehalte zwischen 130 und 59 mg/kg ergeben, wobei auch im Tiefdruckverfahren bedruckte Papiere, Pappen und dgl. verarbeitet wurden.

Je nach Zusammensetzung der Papiere kann deren Anteil zwischen ca. 20 bis ca. 50% betragen; als bester Durchschnittsanteil haben sich ca. 30% Gewichtsanteile gemischter Papiere ergeben. Dieses Ergebnis ist überraschend und war nicht zu erwarten gewesen.

An sich kann Kompost nach der Erfindung mittels aller bekannten Verfahren hergestellt werden, auch mit statischen. Gegenstand der Erfindung sind aber Verfahren, die auf den Zutrag von Papier besonders abgestimmt sind. So ist es aus wirtschaftlichen Gründen vorteilhaft, wenn Papiergemisch verwendet wird, wie es bei den Papiersammlungen anfällt.

Bessere Ergebnisse werden allerdings erzielt, wenn nur einfaches und an sich billiges Papier allein beigemischt wird. Je nach Art des Papier und je nach Konsistenz der organischen Masse und der Zusatzstoffe können schon 20% Gewichtsanteile Papier niedrigere Schwermetallanteile erbringen.

Wenn eine Auswahlmöglichkeit zwischen den einzelnen Papieren in wirtschaftlicher Weise möglich ist, beispielsweise Tageszeitungen bei Verlagen, Reißwolfabfällen von Firmen und Behörden, dann läßt sich der Papieranteil bis zu 50% erhöhen und damit die Schwermetallanteile des Komposts stark nach unten drücken. Normalerweise wird aber aus wirtschaftlichen Gründen ein Papiergemisch genommen werden und dieses dosiert den organischen Zonen beigemischt.

Versuche haben aber auch ergeben, daß aus dem anfallenden Müll alle anderen Stoffe bis auf Papier und organische Stoffe aussortiert und diese beiden Stoffarten miteinander nach dem Verfahren der Erfindung miteinander zu Kompost verarbeitet werden. Im Durchschnitt ergibt dies ein gleichbleibendes Endprodukt in wirtschaftlicher Weise.

Noch wirtschaftlicher und der Qualität des erzeugten Kompostes nicht abträglich ist es, wenn organische Abfälle und Papiere in einer gemeinsamen Tonne (Trommel) untereinander gemischt gesammelt und kompostiert werden.

Die Verweilzeit der Massen in der Trommel richtet sich zum einen nach der Art der Ausgangsmassen und zum anderen nach dem vorgegebenen Zustand der ausgetragenen Massen.

Die Verweilzeit wird jedoch vorzugsweise so gewählt bis der gewünschte Rottezustand ist.

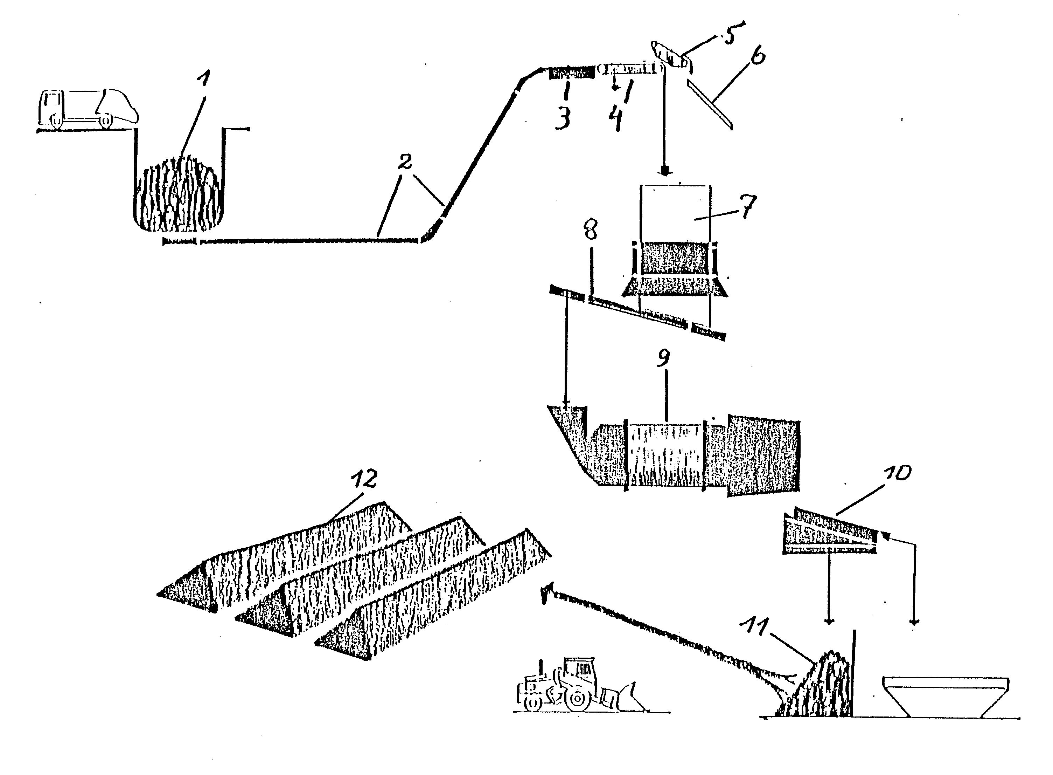

Weitere Merkmale der Erfindung sind den Unteransprüchen, der Beschreibung und der Zeichnung zu entnehmen, die ein bevorzugtes Ausführungsbeispiel zur Gewinnung von besonders wirkungsvollem und umweltfreundlichem Kompost darstellt.

Die nicht getrennt gesammelten und zu behandelnden Massen 1 werden auf einer Halde aufgeschüttet und einem Laufbandsystem 2 zugeführt. Je nach Massenart wird die Geschwindigkeit des Lauf-und Steigbandes eingestellt. Handelt es sich um in Sondertonnen gesammelten Hausrats-und Gewerbemüll oder/und um Abfälle aus Forst-und Landwirtschaft, können die Massen rascher bewegt werden, da die anschließende Sortierung nicht so zeitaufwendig ist, wie bei unsortiertem Müll. Die Aussortierung von Glas, Kunststoffen, Metall und anderem nicht verrottbaren Anteilen werden ebenfalls sortiert herausgenommen und in seitlich angeordnete Tonnen o.dgl. geworfen, die nach Stoffart getrennt sein können. Papier, die bisher ebenfalls heraussortiert wurden, sollten in der Masse verbleiben.

Werden dagegen die organischen Massen und Papiere in einer Sondertonne gesammelt, entfallen diese Sortiermaßnahmen.

An die Schwingrinne 3 schließt sich nun ein Sortierband 4 an, über das ein Magnet 5 in nach unten gerichtetem Winkel angeordnet ist, der die restlichen Metallteile heraussortiert und auf die Schütte 6 ablädt. Magnetabschneider sind an sich bekannt vorteilhaft ist aber eine Lage des Magneten schräg in Abwurfrichtung.

Die sortierte Masse fällt in eine hier als vorzugsweise langsam laufende Schneidmühle gestaltete Zerkleinerungsstation 7, um die Massen zu - schonen. Bereits hier kann vor allem grobstückiges Papier dosiert eingegeben werden. Kleinstückiges Papier kann aber auch erst auf dem Transportband 8 vor der Trommel 9 zugesetzt werden. Dies allerdings nur dann, wenn nicht schon ein ausreichender Papieranteil vorhanden ist.

Von diesem Transportband 8 fällt die Masse 1 in eine Trommel 9, die horizontal oder in Bewegungsrichtung der Masse geneigt angeordnet ist und durch einen nicht dargestellten Antrieb in Rotation gebracht wird. Hierfür können an sich bekannte Rottetrommeln, z.B. die sogenannte Danotrommel verwendet werden. Je nach dem Umfeld um diese Anlage kann hier auch schadstoffarmer Klärschlamm mit artfremden Zusatzstoffen beigegeben werden, der jedoch in der Regel entwässert sein sollte. Ferner können artfremde Zusatzstoffe allein beigemischt werden. In ihr werden die unterschiedlichen Massen beigemischt und weiter zerkleinert; entsprechende Einbauten bewirken dies. In dieser Trommel läuft nun der exotherme Verrottungsprozeß bzw. die Fermentation ab.

Dieser Prozeß dauert je nach Art der Massen ca. 24 bis 36 Stunden. Meß-und Regeleinrichtungen sorgen dafür, daß die richtige Feuchtigkeit, Temperatur, der richtige pH-Wert und dergleichen während des Prozeßablaufs vorhanden sind. Unter dem Austrag der Trommel 9 ist wieder eine Schingförderrine 10 vorgesehen, die nicht kompostfähige Störanteile schräg nach unten absondert.

Der ausgetragene Rohkompost 11 wird auf Mieten 12 abgelagert, wenn er nicht sofort geliefert werden kann.

Je nach dem Qualitätsgrad des Komposts, der Verweilzeit in der Trommel, der Mieten und der Liegezeit auf den Mieten kann es notwendig sein, daß der Kompost umgesetzt werden muß.

Eine präzise Aufgabe von Papieranteilen kann deswegen nicht gegeben werden, weil die Umstände und das Umfeld um eine solche Anlage sehr unterschiedlich sind. Diese Fakten bleiben aber über längere Zeit gleich. Auch die Auslieferung der Papiere stellt sich mit der Zeit auf einen Standard ein, so daß nach Anlauf einer solchen Anlage der zum besten Kompost führende Papieranteil durch entsprechende Messungen ermittelt werden kann.

Werden bei Haushalten und Gewerbe jeweils organische Abfälle und Papiere gemeinsam und von anderen Stoffen getrennt gesammelt, dann muß nach Erfahrungswerten der Anteil beider beim Eingeben in den Verrottungsprozeß entsprechend variiert bzw. eingestellt werden. Denn beim Gewerbe ist die Zusammensetzung des Mülls in der Regel ein anderer als bei den Haushalten.

**Ansprüche**

1. Aus organischen, insbesondere aus dem Müll von Haushalt und Gewerbe stammenden, Massen aufbereiteter Kompost, dadurch gekennzeichnet, daß er einen Gewichtsanteil von ca. 20% bis zu ca. 50%, vorzugsweise von ca. 30%, aus Papieren, also von der Abstammung her ebenfalls organisches Material, gleicher oder ungleicher Art enthält.

2. Verfahren zur Herstellung von Kompost nach Anspruch 1, dadurch gekennzeichnet, daß den organischen Massen Papiere gleicher oder ungleicher Art bis zu einem Gewichtsanteil von ca. 20% bis ca. 50%, vorzugsweise von 30%, beigemischt und das Gemisch in einem exothermen Prozeß verrottet wird.

3. Verfahren nach Anspruch 2, dadurch gekennzeichnet, daß die organischen Massen und die Papiere unzerkleinert in Sammelbehältern gemischt eingegeben und diese Mischmasse in den Rottungsprozeß eingegeben wird.

4. Verfahren nach Anspruch 2 oder 3, dadurch gekennzeichnet, daß die organischen Massen (1) zuerst über einen Schwingförderer (3) gefördert, von artfremden Stoffen auf einem Sortierband (4) befreit und die Massen nach weiterer Scheidung durch einen Magneten (5) einer Zerkleinungsstation (7) zugeführt werden.

5. Verfahren nach Anspruch 4. dadurch gekennzeichnet, daß die zerkleinerte Masse einer rotierenden Trommel (9) gebenenfalls unter Beimischung von Klärschlamm oder/und anderen artfremden Zusatzstoffen zugeführt und in ihr weiter zerkleinert und vermischt wird.

6. Verfahren nach Anspruch 4 oder 5, dadurch gekennzeichnet, daß Papier vor der Zerkleinerungsstation (7) und/oder vor der Trommel (9) in dosierter Menge zugeführt wird.

7. Verfahren nach Anspruch 5 oder 6, dadurch gekennzeichnet, daß die Verweilzeit in der Trommel (9) so lange gewählt wird, bis der gewünschte Rottezustand erreicht ist.

8. Verfahren nach einem der Ansprüche 2 bis 7, dadurch gekennzeichnet, daß der Rohkompost (11) über eine Schwingförderrinne (10) abläuft und durch diese nicht kompostfähige Reste abgesondert werden.

9. Anlage zur Durchführung des Verfahrens nach einem der Ansprüche 2 bis 8 zur Herstellung eines Kompostes nach Anspruch 1, dadurch gekennzeichnet, daß zur Aufbereitung von zu verottenden Massen (1) und einer ersten Aussortierung nicht verottbarer Anteile ein Laufbandsystem (2) mit mindestens einem ebenen Lauf und einem Steigband vorgesehen ist, an das sich eine Schwingrinne (3) und ein Sortierband (4) zur Magnetabschneidung von restlichen Metallteilen anschließt, daß weiter eine Zerkleinerungsstation (7), der die vom Sortierband kommenden Massen zusammen mit Papier zugeführt werden, sowie eine Trommel (9) zum Rotten der so vermischten und zerkleinerten Massen vorgesehen sind.

10. Anlage nach Anspruch 9, dadurch gekennzeichnet, daß in an sich bekannter Weise ein Magnet (5) zur Abscheidung von Metallen vorgesehen und daß dieser schräg in Abwurfrichtung angeordnet ist.

1

2

3

4

5

6

7

8

9

10

11

12

0 263 330